# EUROPÄISCHE PATENTANMELDUNG

(11) **EP 3 309 933 A1**
(43) Veröffentlichungstag der Anmeldung: **18.04.2018**
(21) Anmeldenummer: 17189577.4
(22) Anmeldetag: 06.09.2017
(51) Int. Cl.: H02K 3/42, H02K 1/02, H02K 1/16

(54) **STATORPAKET FÜR ELEKTRISCHE MASCHINE**

(30) Priorität: 17.10.2016 DE 102016220287
(71) Anmelder: Robert Bosch GmbH, 70442 Stuttgart (DE)
(72) Erfinder: Boeker, Thomas, 71672 Marbach (DE); Fickert, Martin, 70197 Stuttgart (DE); Burghaus, Jens, 70839 Gerlingen (DE); Kurz, Stefan, 60322 Frankfurt (DE); Iepure, Ioan Liviu, 70563 Stuttgart (DE); Morisco, David Philipp, 74199 Untergruppenbach (DE)

(57) **Zusammenfassung**

Ein Statorpaket (16) für eine elektrische Maschine (10) umfasst einen Kern (18) mit einer Mehrzahl von ringförmigen Blechlamellen (22), die in einer axialen Richtung aufeinandergestapelt sind und eine Mehrzahl von radial verlaufenden Zähnen (34) bereitstellen, zwischen denen Nuten (36) zur Aufnahme einer Statorwicklung (38) gebildet sind; und einen Abschlussring (20) an wenigstens einem axialen Ende des Statorpakets (16), der auf die Blechlamellen (22) aufgesetzt ist und der aus einem Material mit einer geringeren elektrischen Leitfähigkeit als der Kern (18) gebildet ist; wobei der Abschlussring (20) Zähne (34) aufweist, die die Zähne (34) des Kerns (18) in axiale Richtung zumindest teilweise überdecken.

## Beschreibung

### Gebiet der Erfindung

Der Erfindung betrifft ein Statorpaket für eine elektrische Maschine sowie eine elektrische Maschine.

### Stand der Technik

Drehstrommaschinen mit radialer Flussführung ermöglichen hohe Drehmomente auf kurzem axialem Bauraum. Beispielsweise können solche elektrischen Maschinen zwischen einen Verbrennungsmotor und ein Getriebe im Antriebsstrang eines Fahrzeugs geschaltet werden, um auf diese Weise einen Hybridmotor zu bilden. Dabei können diese elektrischen Maschinen als Innenläufer (mit dem Rotor innerhalb des Stators) oder als Außenläufer (mit dem Rotor außerhalb des Stators) aufgebaut sein.

Alle Ausführungen dieser elektrischen Maschinen mit radialer Flussführung tragen Wicklungen, die das Statorpaket in der Regel axial verlassen. Bedingt durch diesen Aufbau können im Randbereich Streufelder entstehen, die axial in den Stator eintreten. Diese Streufelder können im Randbereich des Stators Wirbelströme hervorrufen, die zu Verlusten führen.

Die EP 1 840 910 A1 betrifft eine magnetische Abschirmung für einen Stator, bei der ein weichmagnetisches Verbundmaterial auf einen Statorkern aufgesetzt ist.

### Offenbarung der Erfindung

### Vorteile der Erfindung

Ausführungsformen der vorliegenden Erfindung können in vorteilhafter Weise ermöglichen, eine verlustarme rotierende elektrische Maschine mit hohem Drehmoment bereitzustellen.

Ideen zu Ausführungsformen der vorliegenden Erfindung können unter anderem als auf den nachfolgend beschriebenen Gedanken und Erkenntnissen beruhend angesehen werden.

Ein Aspekt der Erfindung betrifft ein Statorpaket für eine rotierende elektrische Maschine, die beispielsweise mit Drehstrom betrieben werden kann. Die elektrische Maschine kann als Motor oder/und als Generator betrieben werden und/oder kann einen Rotor und einen Stator umfassen, wobei der Stator das Statorpaket und eine Wicklung umfasst. Der Rotor kann ein Käfigläufer-Rotor, ein permanent erregter Rotor (mit Permanentmagneten) oder ein passiver Rotor lediglich aus einem weichmagnetischen Material sein. Die Flussführung für den magnetischen Fluss durch den Stator und den Rotor kann in radiale Richtung erfolgen.

Gemäß einer Ausführungsform der Erfindung umfasst das Statorpaket einen Kern bzw. Statorkern mit einer Mehrzahl von ringförmigen Blechlamellen, die in einer axialen Richtung aufeinandergestapelt sind und eine Mehrzahl von radial verlaufenden Zähnen bereitstellen, zwischen denen Nuten zur Aufnahme einer Statorwicklung gebildet sind, und einen Abschlussring an wenigstens einem axialen Ende des Statorpakets, der auf die Blechlamellen aufgesetzt ist und der aus einem Material mit einer geringeren elektrischen Leitfähigkeit als der Kern gebildet ist. Der Abschlussring weist dabei Zähne auf, die die Zähne des Kerns in axiale Richtung zumindest teilweise überdecken. Mit anderen Worten können die Nuten im Kern durch den Abschlussring hindurch fortgesetzt werden. Die Statorwicklung kann auch durch Nuten im Abschlussring verlaufen. Somit kann der Abschlussring auch zur Drehmomenterzeugung beitragen. Da der Abschlussring eine geringere Leitfähigkeit aufweist als der Kern, können entstehende zusätzliche Wirbelströme im Randbereich des Stators, d.h. im Abschlussring, reduziert werden. Auf diese Weise können Verluste im Stator reduziert und damit eine Temperatur im Stator reduziert werden. Der Wirkungsgrad der elektrischen Maschine kann erhöht werden.

Der Abschlussring kann an einem Ende in axialer Richtung als äußerer Abschluss auf den Statorkern aus Blechlamellen aufgebracht sein. Insgesamt kann das Statorpaket so in axialer Richtung aus verschiedenen Materialien aufgebaut sein, beispielsweise aus einem Eisenblechpaket als Kern und entweder einem weiteren Blechpaket aus einem leitfähigeren Blechmaterial oder einer Abschlussschicht aus einem weichmagnetischen Material, wie etwa SMC (soft magnetic composite).

Gemäß einer Ausführungsform der Erfindung weist der Abschlussring einen gleichen Querschnitt auf wie der Kern. Dabei können sich die Zähne des Kerns und die Zähne des Abschlussrings vollständig überdecken. Die Abschlussschicht aus Kompositmaterial oder das weitere Blechpaket kann mit dem Blechpaket des Kerns deckungsgleich sein.

Gemäß einer Ausführungsform der Erfindung umfasst der Abschlussring wenigstens eine Blechlamelle, die aus einem Material mit einer geringeren elektrischen Leitfähigkeit als die Blechlamellen des Kerns gebildet ist. Genauso wie der Kern kann der Abschlussring ein Blechpaket aus Blechlamellen sein, die allerdings aus einem anderen Blechmaterial hergestellt sind als der Kern. Die Bleche im Kern und im Abschlussring können unterschiedlich dick sein. Insgesamt kann das Statorpaket in axialer Richtung aus verschiedenen Elektroblechen aufgebaut sein. Beispielsweise kann das Statorpaket im Kern aus einem ersten Blechmaterial, wie beispielsweise M440-50A, und im Randbereich aus einem zweiten Blechmaterial, wie etwa M270-35A, aufgebaut sein.

Gemäß einer Ausführungsform der Erfindung ist der Abschlussring aus einem weichmagnetischen Pulververbundwerkstoff, insbesondere einem gesinterten Kompositmaterial gepresst, der eine geringere elektrische Leitfähigkeit als die Blechlamellen des Kerns aufweist. Der Abschlussring kann eine Abschlussschicht aus Kompositmaterial sein. Beispielsweise können weichmagnetische Partikel, wie etwa beschichtete Eisenspäne bzw. Eisenpartikel, als Kompositmaterial verwendet werden.

Gemäß einer Ausführungsform der Erfindung ist der weichmagnetische Pulververbundwerkstoff aus einem elektrisch, magnetisch und thermisch isotropen Material hergestellt.

Gemäß einer Ausführungsform der Erfindung weisen die Zähne des Abschlussrings abgerundete Kanten auf. Für eine verteilte Wicklung, die beispielsweise unter Verwendung der Steckwickeltechnologie in die Nuten im Statorpaket gesteckt wird, kann nach dem Einstecken der einzelnen Wickelelemente ein Umbiegen notwendig sein, um den Bauraum der elektrischen Maschine zu reduzieren. Scharfe Kanten am Statorpaket können beim Biegen der Wicklung eine Isolationsschicht an der Wicklung beschädigen und so eventuell Windungskurzschlüsse erzeugen. Wenn ein Abschlussring aus Kompositmaterial verwendet wird, können die Zähne bzw. die dazwischen gebildeten Nuten an einer axialen Stirnseite mit Rundungen versehen werden und so beschädigungsloses Biegen der Wicklung unterstützt werden.

Gemäß einer Ausführungsform der Erfindung weist der Abschlussring einen in axiale Richtung von einer Stirnfläche des Statorpakets abstehenden Bereich auf. Mit anderen Worten muss der Abschlussring nicht ebene Seitenflächen aufweisen sein, sondern kann dreidimensional geformt sein. Insbesondere kann er zwischen der Statorwicklung und dem Rotor in axiale Richtung verlängert sein, um dort mehr Flux einzufangen. Beispielsweise können die Zähne des Abschlussrings in axialer Richtung von der Stirnfläche abstehenden Zahnenden aufweisen, die den Stator in axiale Richtung verlängern.

Gemäß einer Ausführungsform der Erfindung ist der Abschlussring in axialer Richtung dicker als eine Blechlamelle aus dem Kern. Die Abschlussschicht aus Kompositmaterial kann die Dicke mehrerer Blechlamellen aus dem Kern aufweisen bzw. der Abschlussring kann aus mehreren Abschlussblechlamellen aufgebaut sein.

Gemäß einer Ausführungsform der Erfindung weist der Abschlussring eine axiale Dicke auf, die weniger als 25% der axialen Dicke des Kerns ist. Das Verhältnis der Dicke der Abschlussschicht aus Kompositmaterial bzw. der Dicke aller Abschlussblechlamellen kann weniger als 25% sein.

Gemäß einer Ausführungsform der Erfindung weist der Abschlussring eine geringere magnetische Permeabilität auf als der Kern bzw. die Blechlamellen des Kerns. Es ist möglich, dass sich die Materialien des Kerns und des Abschlussrings auch durch ihre unterschiedliche magnetische Permeabilität unterscheiden. Beispielsweise kann das Verhältnis der Dicke des Abschlussrings zu der Dicke des Kerns derart eingestellt werden, dass das Drehmoment maximiert und die Verluste gleichzeitig minimiert werden.

Gemäß einer Ausführungsform der Erfindung weist das Statorpaket an beiden axialen Enden einen Abschlussring auf. Es ist zu verstehen, dass das Statorpaket, der Stator und/oder der Rotor symmetrisch zu einer Mittelebene aufgebaut sein können.

Ein weiterer Aspekt der Erfindung betrifft eine elektrische Maschine, die einen Stator mit einem Statorpaket so wie obenstehend und untenstehend umfasst. Weiter kann die elektrische Maschine einen Rotor mit Magneten, die den Zähnen des Rotors in radialer Richtung gegenüberliegend angeordnet sind, umfassen. Die Magnete des Rotors können in axialer Richtung über das Statorpaket und/oder den wenigstens einen Abschlussring hinausragen. Auf diese Weise kann eine radiale Komponente des von den Magneten erzeugten Magnetfelds für die Drehmomenterzeugung verwendet werden. Gleichzeitig werden die Wirbelströme, die von einer axialen Komponente des Magnetfelds verursacht werden, unterdrückt oder zumindest vermindert.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt einen schematischen Teilquerschnitt durch eine elektrische Maschine gemäß einer Ausführungsform der Erfindung.
Fig. 2 zeigt einen schematischen Teilquerschnitt durch eine elektrische Maschine gemäß einer weiteren Ausführungsform der Erfindung.
Fig. 3 zeigt eine perspektivische Ansicht eines Statorpakets gemäß einer Ausführungsform der Erfindung.
Fig. 4 zeigt eine Seitenansicht des Statorpakets aus der Fig. 3.
Fig. 5 zeigt eine perspektivische Ansicht eines Abschnitts des Statorpakets aus den Fig. 3 und 4.
Fig. 6 zeigt eine perspektivische Ansicht des Abschnitts aus der Fig. 5 zusammen mit einer Statorwicklung.
Fig. 7 zeigt eine perspektivische Ansicht eines Abschnitts eines Statorpakets gemäß einer weiteren Ausführungsform der Erfindung.
Fig. 8 zeigt eine perspektivische Ansicht des Abschnitts aus der Fig. 7 zusammen mit einer Statorwicklung.
Fig. 9 zeigt eine perspektivische Ansicht eines Abschnitts eines Statorpakets gemäß einer weiteren Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

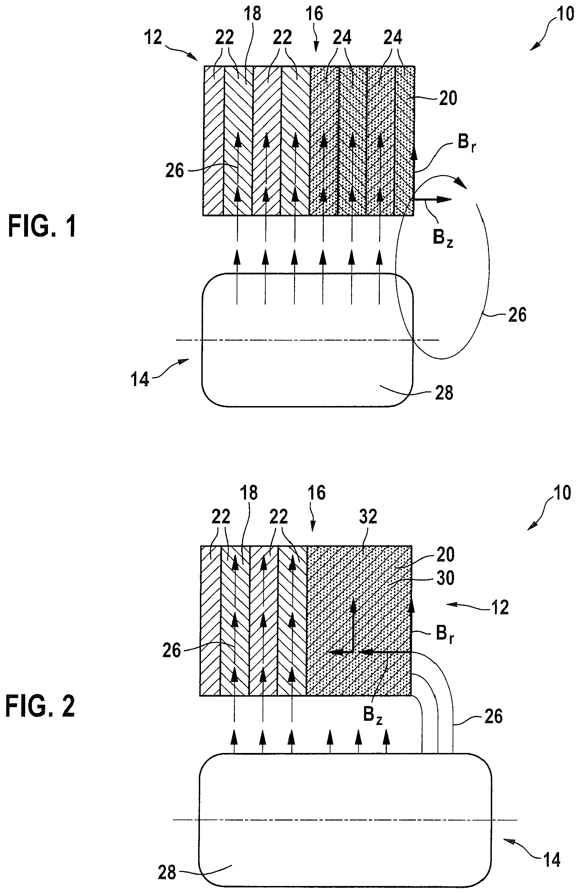

Fig. 1 zeigt einen Teilquerschnitt durch eine elektrische Maschine 10, die einen Stator 12 und einen relativ zu dem Stator 12 rotierbaren Rotor 14 umfasst. Der Stator 12 und der Rotor sind ringförmig, wobei in der Fig. 1 lediglich ein Schnitt durch die beiden Ringe gezeigt ist. In der Fig. 1 verläuft die axiale Richtung, in der auch die Drehachse des Rotors 14 verläuft in der Horizontalen, während die radiale Richtung in der Vertikalen verläuft.

Der Stator 12 umfasst ein Statorpaket 16, das einen Kern 18 und einen Abschlussring 20 aufweist. Der Kern 18 umfasst eine Mehrzahl von Blechlamellen 22, die in axialer Richtung aufeinandergestapelt sind. Der Abschlussring 20, der an einem axialen Ende des Statorpakets 16 an den Kern 18 anschließt, ist aus einem Material gefertigt, das eine geringere elektrischen Leitfähigkeit als die Blechlamellen 22 des Kerns 18 aufweist.

In der Fig. 1 ist eine erste Ausführungsform gezeigt, bei der der Abschlussring 20 aus einer Mehrzahl von Blechlamellen 24 aus einem anderen Blechmaterial als die Blechlamellen 22 des Kerns 18 aufgebaut ist. Die Blechlamellen 24 und die Blechlamellen 22 können die gleiche Dicke in axialer Richtung aufweisen.

Im Betrieb der elektrischen Maschine 10 erzeugt der Stator 12 mit einer bestromten Wicklung ein magnetisches Feld 26, das in dem Rotor 14, der beispielsweise mit Permanentmagneten 28 ausgerüstet ist, ein Drehmoment erzeugt. In einem Stator 12 bzw. Kern 18 aus Blechlamellen 22 werden die Wirbelstromverluste, die von der radialen Komponente Bᵣ des magnetischen Felds 26 verursacht werden, durch die Lamellierung unterdrückt. Insbesondere im Randbereich des Statorpakets 16 tritt jedoch eine axiale Komponente B_{z} auf, deren Zeitänderung auch zu Wirbelströmen führen kann. Diese Wirbelströme verlaufen in der Fläche der Blechlamellen 24 und können durch die Lamellierung nur schlecht reduziert werden.

An den Abschlussring 20 schließt sich in axiale Richtung ein in den Fig. 1 und 2 nicht gezeigter Wickelkopf an, der auch Streufelder im Statorpaket 16 erzeugen kann. Mit dem Abschlussring 20 können weiter zusätzliche Verluste dieses Streufeldes reduziert werden. Auf diese Weise kann auf eine Abschirmung verzichtet werden und der Wickelkopf kann näher an das Statorpaket 16 angeordnet werden, was die elektrische Maschine in axiale Richtung verkürzen kann.

In der Fig. 2 ist eine weitere Ausführungsform einer elektrischen Maschine 10 gezeigt, die einen im Wesentlichen gleich aufgebauten Stator 12 aufweist wie die aus der Fig. 1. Lediglich der Abschlussring 20 ist eine Schicht 30 aus einem weichmagnetischen Kompositmaterial (SMC) 32. Ein derartiges Material 32 kann in etwa Somaloy © sein. Die Schicht 30 kann in axiale Richtung dicker sein als eine Blechlamelle 22 aus dem Kern 18 und beispielsweise eine Dicke einer Mehrzahl dieser Blechlamellen 22 aufweisen.

Das Kompositmaterial 32 kann beispielsweise Partikel aus Eisen oder einem Ferrit umfassen, die mit einer elektrisch nicht oder schlecht leitenden Schicht überzogen sind und die zu dem Material 32 zusammengepresst worden sind. Somit werden die entstehenden Wirbelströme auf die einzelnen Partikel begrenzt. Dadurch dass das Kompositmaterial 32 damit in alle Richtungen (d.h. isotrop) eine gleichmäßig niedrige, elektrische Leitfähigkeit aufweist, können auch Wirbelströme, die von der axialen Komponente B_{z} erzeugt werden, gut unterdrückt werden. Allerdings kann es sein, dass das Kompositmaterial 32 eine niedrigere magnetische Permeabilität aufweist als der Kern 18, was die Drehmomenterzeugung reduzieren kann.

In der Fig. 2 ist weiter gezeigt, dass der Rotor 14 und insbesondere die Magnete 28 über das Statorpaket in axiale Richtung hinausragen. Dies könnte auch bei der Ausführungsform der Fig. 1 so gestaltet sein. Auf diese Weise wird erreicht, dass auch im Endbereich des Statorpakets 16 und damit im Abschlussring 20 die radiale Komponente Bᵣ noch genauso hoch ist wie im Kern 18 und damit eine höhere Drehmomentausbeute erreicht werden kann. Durch den Abschlussring 20 werden aber Wirbelstromverluste durch die axiale Komponente B_{z} dabei besser unterdrückt.

Die Wahl eines Abschlussrings 20 aus Kompositmaterial 32 kann auch den weiteren Vorteil aufweisen, dass in einem Hochfrequenzbereich von mehr als 1 kHz geringere Wirbelstromverluste entstehen als in Blechlamellen 24. Für eine elektrische Maschine 10, die für einen Einsatzbereich mit Frequenzen unter 1 kHz vorgesehen ist, kann damit ein Abschlussring 20 aus Blechlamellen 24 von Vorteil sein.

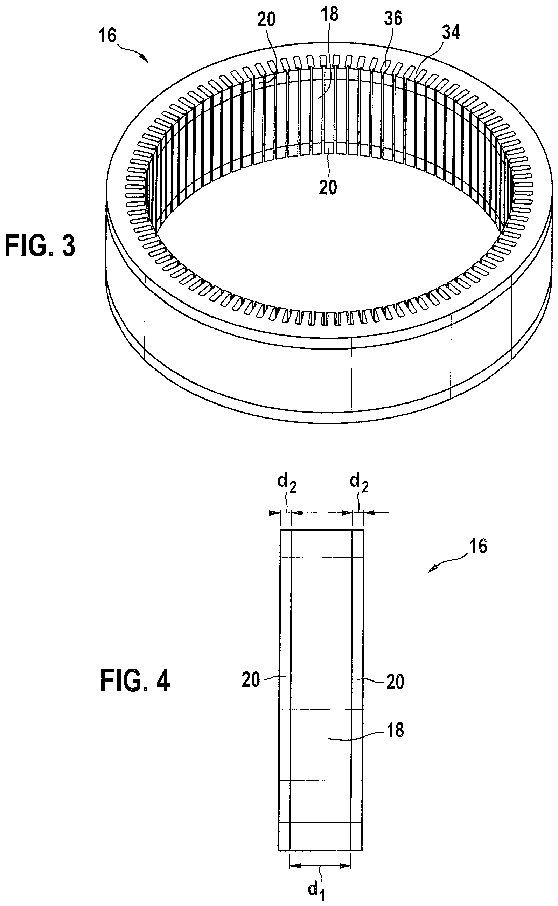

Die Fig. 3 zeigt eine perspektivische Ansicht eines Statorpakets 16 mit einem Kern 18, der, wie in den Fig. 1 und 2 gezeigt, aus Blechlamellen 22 aufgebaut ist und zwei an axialen Enden anschließenden Abschlussringen 20. Der Kern 18 und die Abschlussringe 20 weisen radial nach innen gerichtete Zähne 34 auf, zwischen denen Nuten 36 gebildet sind, in die Wicklungen für den Stator 12 aufgenommen werden können. Die Abschlussringe 20 und der Kern 18 weisen den gleichen Querschnitt auf und überdecken sich vollständig.

Wie in der Fig. 1 gezeigt, können die Abschlussringe 20 aus einer Mehrzahl von Blechlamellen 24 aufgebaut sein, die die gleiche Form wie die Blechlamellen 22 aus dem Kern 18 aufweisen können. Alternativ dazu können die Abschlussringe 20, wie in der Fig. 2 gezeigt, aus einem Kompositmaterial 32 hergestellt sein.

Die Fig. 4 zeigt, dass die Dicke eines Abschlussrings d₂ weniger als 25% der axialen Dicke d₁ des Kerns 18 betragen kann. Zusammen können die beiden Abschlussringe eine Dicke d₂ aufweisen, die weniger als 50% der Dicke d₁ des Kerns 18 beträgt.

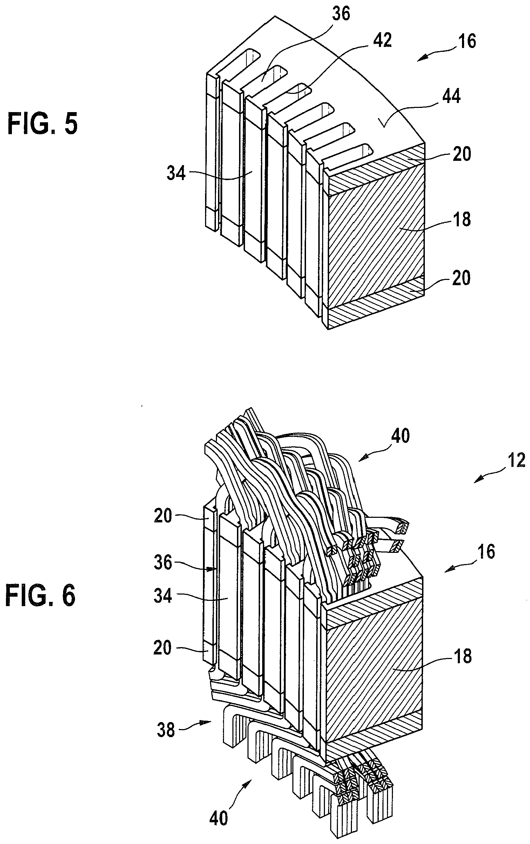

Die Fig. 5 zeigt einen Abschnitt des Statorpakets 16 detaillierter. Es ist zu erkennen, dass die Zähne 34, die von dem Kern 18 und den beiden Abschlussringen 20 gebildet werden, T-förmig sind, so dass die dazwischenliegenden Nuten 36 einen verjüngten Eingang aufweisen.

Die Fig. 6 zeigt, wie die Wicklung 38 des Stators 12 durch die Nuten 36 verläuft und wie die Wickelköpfe 40 der Wicklung 38 aus den Nuten 36 in axiale Richtung austreten.

Bei der Ausführungsform der Fig. 5 und 6 weisen die Nuten an den axialen Stirnseiten des Statorpakets 16 im Wesentlichen rechtwinklige Kanten 42 zu einer axialen Stirnfläche 44 des Statorpakets 16 auf. Dies wird besonders dann der Fall sein, wenn die Abschlussringe 20 aus aufeinandergestapelten Blechlamellen 24 realisiert sind.

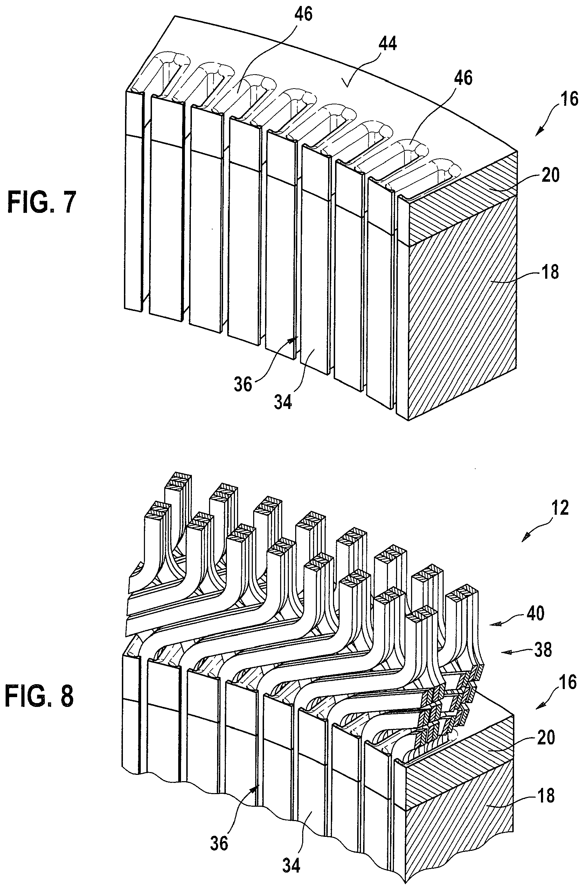

Im Gegensatz dazu zeigt die Fig. 7 ein Statorpaket 16 mit einem Abschlussring 20, der abgerundete Kanten 46 aufweist. Die Fig. 8 zeigt, wie die Wicklung 38 bereits im Inneren des Statorpakets 16 gekrümmte Leiter aufweisen kann, was durch die abgerundeten Kanten 46 ermöglicht wird. Es ist möglich, dass die in den Fig. 7 und 8 gezeigte Ausführungsform eines Statorpakets 16 auf beiden axialen Seiten einen Abschlussring 20 aufweist.

Die Innenflächen der Nuten 36 und die Stirnfläche 44 treffen bei den Fig. 7 und 8 nicht rechtwinklig aufeinander, sondern der Abschlussring 20 ist so geformt, dass die Innenflächen mit einem maximalen Krümmungsradius in die Stirnfläche 44 übergehen. Dies kann an den Kanten 46 in radiale Richtung und/oder den Kanten in Umfangsrichtung des Statorpakets vorgesehen sein. Insbesondere, wenn der Abschlussring 20 aus Kompositmaterial 32 hergestellt ist, können derartige kompliziertere Geometrien auf einfache Art und Weise hergestellt werden.

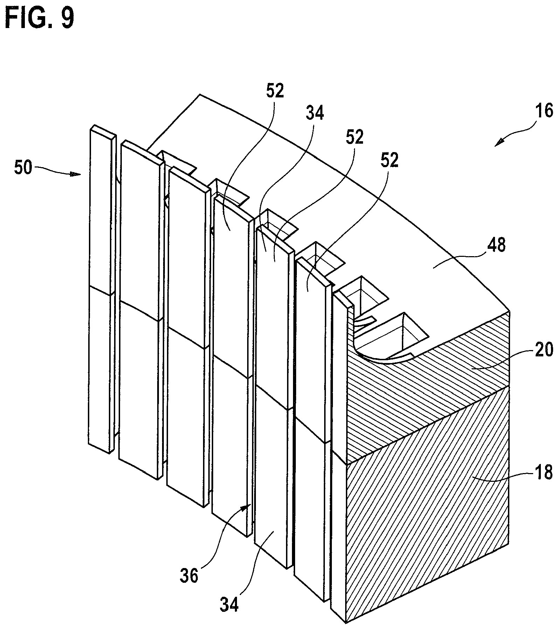

Fig. 9 zeigt eine weitere Ausführungsform eines Statorpakets 16, bei dem der Abschlussring 20 aus Kompositmaterial dreidimensional geformt ist. Der Abschlussring 20 weist einen in axiale Richtung von einer Stirnfläche 48 des Statorpakets 16 abstehenden, das Statorpaket in Umfangsrichtung umlaufenden Bereich 50 auf, der eine in Richtung Stator weisende Fläche (nahtlos) verlängert, um auf diese Weise mehr Flux einzufangen. Der Bereich 50 ist von den Zähnen 34 des Abschlussrings 20 gebildet, die in axialer Richtung von der Stirnfläche 48 abstehende Zahnenden 52 aufweisen. Die Zahnenden 52 umschließen die Statorwicklung 38 zusammen mit der Stirnfläche 48 von zwei Seiten.

Abschließend ist darauf hinzuweisen, dass Begriffe wie "aufweisend", "umfassend" etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Statorpaket (16) für eine elektrische Maschine (10), das Statorpaket (16) umfassend:
einen Kern (18) mit einer Mehrzahl von ringförmigen Blechlamellen (22), die in einer axialen Richtung aufeinandergestapelt sind und eine Mehrzahl von radial verlaufenden Zähnen (34) bereitstellen, zwischen denen Nuten (36) zur Aufnahme einer Statorwicklung (38) gebildet sind; und
einen Abschlussring (20) an wenigstens einem axialen Ende des Statorpakets (16), der auf die Blechlamellen (22) aufgesetzt ist und der aus einem Material mit einer geringeren elektrischen Leitfähigkeit als der Kern (18) gebildet ist;
**dadurch gekennzeichnet, dass**
der Abschlussring (20) Zähne (34) aufweist, die die Zähne (34) des Kerns (18) in axiale Richtung zumindest teilweise überdecken.

2. Statorpaket (16) nach Anspruch 1,
wobei der Abschlussring (20) einen gleichen Querschnitt aufweist wie der Kern (18); und/oder
wobei sich die Zähne (34) des Kerns (18) und die Zähne (34) des Abschlussrings (20) vollständig überdecken.

3. Statorpaket (16) nach Anspruch 1 oder 2,
wobei der Abschlussring (20) wenigstens eine Blechlamelle (24) umfasst, die aus einem Material mit einer geringeren elektrischen Leitfähigkeit als die Blechlamellen (22) des Kerns (18) gebildet ist.

4. Statorpaket (16) nach Anspruch 1 oder 2,
wobei der Abschlussring (20) aus einem weichmagnetischen Pulververbundwerkstoff, insbesondere einem gesinterten Kompositmaterial (32) gepresst ist, der eine geringere elektrische Leitfähigkeit als die Blechlamellen (22) des Kerns (18) aufweist.

5. Statorpaket (16) nach Anspruch 4,
wobei der weichmagnetische Pulververbundwerkstoff aus einem elektrisch,
magnetisch und thermisch isotropen Material hergestellt ist.

6. Statorpaket (16) nach Anspruch 4 oder 5,
wobei die Zähne (34) des Abschlussrings (20) abgerundete Kanten (46) aufweisen.

7. Statorpaket (16) nach einem der Ansprüche 4 bis 6,
wobei der Abschlussring (20) einen in axiale Richtung von einer Stirnfläche (48) des Statorpakets (16) abstehenden das Statorpaket (16) in axiale Richtung verlängernden Bereich (50) aufweist; und/oder wobei die Zähne (34) des Abschlussrings (20) in axialer Richtung von der Stirnfläche abstehenden Zahnenden (52) aufweisen.

8. Statorpaket (16) nach einem der vorhergehenden Ansprüche,
wobei der Abschlussring (20) in axiale Richtung dicker ist als eine Blechlamelle (22) aus dem Kern (18).

9. Statorpaket (16) nach einem der vorhergehenden Ansprüche,
wobei der Abschlussring (20) eine axiale Dicke (d₂) aufweist, die weniger als 25% der axialen Dicke (d₁) des Kerns ist; und/oder wobei der Abschlussring (20) eine andere magnetische Permeabilität aufweist als die Blechlamellen (22) des Kerns (18).

10. Statorpaket (16) nach einem der vorhergehenden Ansprüche,
wobei das Statorpaket (16) an beiden axialen Enden einen Abschlussring (20) aufweist.

11. Elektrische Maschine (10) umfassend: einen Stator (12) mit einem Statorpaket (16) nach einem der vorhergehenden Ansprüche;

12. Elektrische Maschine (10) nach Anspruch 11, weiter umfassend:
einen Rotor (14) mit Magneten (28), die den Zähnen (34) des Rotors (14) in radialer Richtung gegenüberliegend angeordnet sind;
wobei die Magnete (28) des Rotors (14) in axiale Richtung über das Statorpaket (16) und/oder den wenigstens einen Abschlussring (20) hinausragen.
